# EUROPEAN PATENT SPECIFICATION

(11) **EP 2 510 264 B1**
(45) Date of publication and mention of the grant of the patent: **23.08.2017**
(21) Application number: 09775105.1
(22) Date of filing: 08.12.2009
(51) Int. Cl.: F16J 15/32, G01K 11/26, G01L 5/24, G01M 3/24, G01N 29/24

(54) **SENSORIZED SEAL UNIT**
MIT SENSOREN AUSGESTATTETE DICHTUNGSEINHEIT
ENSEMBLE D'ÉTANCHÉITÉ AVEC CAPTEUR

(43) Date of publication of application: 17.10.2012
(73) Proprietor: Aktiebolaget SKF, 415 50 Göteborg (SE)
(72) Inventor: ZIEGLER, Sebastian, NL-3431 LS Nieuwegein (NL); HERDIER, Romain, NL-3451 WD Vleuten (NL); WIT de, Frank, NL-3432 RG Nieuwegein (NL)
(74) Representative: Burö, Sven Peter
(86) International application number: PCT/EP2009/008754
(87) International publication number: WO 2011/069519

(56) References cited:
- EP-A1- 1 965 107
- EP-A2- 1 156 234
- US-A1- 2007 074 563
- JASON D STERNHAGEN ET AL: "A Novel Integrated Acoustic Gas and Temperature Sensor" IEEE SENSORS JOURNAL, IEEE SERVICE CENTER, NEW YORK, NY, US, vol. 2, no. 4, 1 August 2002 (2002-08-01), XP011065674 ISSN: 1530-437X

## Description

### FIELD OF THE INVENTION

The present invention relates to a radial seal that is provided with one or more sensors for measuring a parameter or parameters of interest and/or for detecting leakage of a lubricant.

### BACKGROUND

Radial seal assemblies are widely applied to seal an annular gap between relatively rotatable components; for example, the gap between a shaft and the bore of a housing for a rolling element bearing. The seals serve to retain lubricant within the housing and to exclude the entry of contaminants. Both of these aspects are important for proper running of the bearing and the prevention of early failure. A typical radial seal comprises an outer casing to which a sealing lip is bonded. Elastomeric materials, such as nitrile rubber, may be used for the sealing lip. The outer casing seals statically against the housing bore. During static conditions, the sealing lip seals statically against a counterface on the shaft. During rotational conditions, the sealing lip provides dynamic sealing and is in sliding contact with the counterface.

Consequently, the sealing lip is subject to wear, which will eventually lead to loss of sealing function and lubricant leakage. Seal lip wear is caused by sliding friction, which generates heat. It is therefore advantageous to measure the temperature of the seal lip. An example of a seal lip provided with a temperature sensor is disclosed in EP 1965107, whereby thermo-elements are mounted on a surface of the seal lip.

If lubricant leakage does occur because of seal lip wear, it important to replace the seal as soon as possible, because a leak can lead to major damage. One solution for detecting leakage is disclosed in US 2004/0232620, whereby a sealing arrangement is provided with an absorbent material that swells upon contact with e.g. a lubricating oil. The swelling is detected by a sensor in contact with the absorbent material.

Other factors can adversely affect lubrication performance, for example: the quality of the lubricant itself. US 2006/006601 discloses a sealing system with a sensor device provided with a measuring probe that extends into a space to be sealed off and, in use, is exposed to the medium to be sealed. In one embodiment, the probe measures the age of the sealed medium.

In EP1156234, a seal ring for sealing a shaft and bearing arrangement is disclosed, wherein the seal comprises a garter spring that functions as a stationary antenna. The seal ring further comprises a rotatable antenna that is connected to a sensor mounted on a rotating part. In one embodiment, the sensor is surface acoustic wave device mounted on the shaft.

Consequently, there are many applications where it is advantageous to provide a seal unit with one or more sensors. The use of different types of sensors, however, adds to the cost and complexity of manufacturing a sensorized seal unit and increases the demands placed on peripheral equipment for receiving and processing different sensor signals. There is thus room for improvement

### SUMMARY OF THE INVENTION

It is an object of the present invention to define a seal unit provided with a sensor device that can be readily adapted to measure or detect a variety of parameters.

The aforementioned object is achieved by means of a seal unit comprising a radial seal lip, the unit being provided with at least one sensor that comprises a first acoustic wave device and a second acoustic wave device. Each acoustic wave device has an input transducer for generating a mechanical acoustic wave on or through a piezoelectric substrate, and has an output transducer for receiving the mechanical acoustic wave and generating an output signal dependent on a wave propagation between the input and output transducers. According to the invention, the first and second acoustic wave devices are adapted to generate an essentially identical output signal when subjected to the same conditions, whereby one of the first and second acoustic wave devices is hermetically sealed and the other of the first and second devices (150, 155, 340) is exposed to the environment.

Typically, an acoustic wave device comprises at least one electrode pair, in which each electrode of the pair is deposited on the piezoelectric substrate, in a pattern that resembles two combs with interleaved teeth. When one electrode of the pair (the input transducer) receives an electric pulse, the piezoelectric substrate is caused to resonate. In other words, the electrical input signal is transformed into an acoustic wave, which travels on or through the piezoelectric substrate to the other electrode of the pair (the output transducer). On arrival at the other electrode, the transducing process is reversed and the mechanical acoustic wave is transformed into an electrical output signal. The input and output transducers may be formed by a single electrode pair as described above, or each of the input and output transducers may constitute an electrode pair.

All acoustic wave devices can serve as sensors, since the piezoelectric substrate is sensitive to perturbations of many different physical parameters. Any change in the characteristics of the path via which the acoustic wave propagates will result in a change in the output. For example, temperature affects the crystalline structure of the piezoelectric substrate and correspondingly affects wave velocity. Therefore, a change in temperature will cause a change in the time taken for an acoustic wave to reach the output transducer. Consequently, the acoustic wave device may be a delay line sensor with an output signal that is analyzed in the time domain. Such a sensor may further comprise one or more reflectors in order to increase the delay time.

Temperature also affects the piezoelectric substrate on which the input and output transducers are deposited. A deformation of the substrate due to e.g. temperature variations causes a change in the spacing between the interleaved electrode teeth, which causes a change in the resonant frequency of the acoustic wave device. Thus, the acoustic wave device may be a resonance sensor with an output signal that is analyzed in the frequency domain. A resonance sensor may also comprise one or more reflectors. The output signal may be analyzed in both the time and frequency domains.

Moreover, the acoustic wave devices used in the invention may be a surface acoustic wave (SAW) device or a bulk acoustic wave (BAW) device.

In one example, the acoustic wave device is a SAW sensor that is calibrated for temperature measurement. The sensor may be mounted on the seal lip, for example: at a location close to where the lip makes contact with the counterface, in order to detect abnormal temperature rises. The sensor may also be embedded in the seal lip. A seal unit according to the invention may further comprise a wear ring, to provide the counterface against which the seal lip bears. The aforementioned SAW temperature sensor may also be mounted on a radially outer surface of the wear ring. Preferably, the transduction elements of the SAW temperature sensor are hermetically sealed. This enhances the accuracy of the temperature measurement, as the presence of a medium such as oil on the piezoelectric substrate will have an influence on the output signal from the sensor. In one embodiment of the invention, the fact that the presence of oil changes the output signal is used in order to detect leaks. The seal unit is provided with a second acoustic wave device having a second input transducer and a second output transducer deposited on a second piezoelectric substrate. The substrate and transduction elements of the second device are exposed (unsealed). The substrate and transduction elements of the first acoustic wave device are hermetically sealed. The first and second acoustic wave devices are calibrated with respect to each other, so that the generated output signals are identical when the devices experience the same conditions. When oil leakage occurs, oil escapes from an oil side of the seal assembly to an air side of the assembly. At least the second acoustic wave device is therefore mounted at the air side of the assembly, at a location on the seal lip or at a location on the wear ring (when present) that allows the leaked oil to contact the second acoustic wave device. Preferably, the first (hermetically sealed) SAW device is also arranged such that leaked oil makes contact with this device also. This ensures that apart from exposure to the leaked medium, the first and second devices experience the same conditions, such as temperature.

Thus, when no leakage has occurred, the second acoustic wave device is "dry" and suitably generates the same output signal as the first device. In the presence of a leak which makes contact with the piezoelectric substrate of the unsealed SAW device, the propagation of acoustic waves on this substrate is affected, meaning that there will be a difference between the output signal from the first device and the output signal from the second device. The detected difference can be used to indicate that a leak has occurred and that the seal needs to be replaced.

As will be understood, the first and second acoustic wave devices can be incorporated in a single sensor unit.

In a further embodiment of the invention, the acoustic wave device is configured for detecting the presence of a contaminant in the sealed lubricant. For example, the device may be a BAW device whereby a surface of the piezoelectric substrate is treated with a chemical coating that is adapted to absorb water. When water is absorbed, the mass of the BAW device changes. This in turn affects wave propagation through the bulk of the device, causing a change in the signal from the output transducer. The acoustic wave device may also be configured to detect the presence of hydrogen and/or metal oxides. Suitably, sensors for detecting lubricant properties are mounted at the oil side of the seal. For example, on the seal lip or on the radially outer surface of the wear sleeve (when present)

As described with reference to the SAW leakage sensor, sensors comprising a BAW device, whereby a change in the output signal depends on exposing the piezoelectric substrate to a physical medium, are preferably equipped with a further BAW device that is hermetically sealed. Thus, in the absence of the physical medium, the sealed BAW device provides a reference signal which is identical to the signal from the unsealed BAW device. A difference in the signals will be detected when the unsealed device comes into contact with the physical medium. A seal unit may be provided with at least one acoustic wave sensor that is configured to measure torque. The sensor may be mounted on the wear sleeve, thereby enabling measurement of e.g. shaft torque. A SAW or BAW torque sensor may also be mounted on e.g. a radially outer surface of the seal lip. A seal unit according to the invention may also be provided with an acoustic wave device adapted to measure pressure. Furthermore, the unit may comprise an acoustic wave device mounted at the oil side that is adapted to measure oil viscosity.

As described, the piezoelectric substrate of an acoustic wave device resonates in response to the input transducer receiving an electrical pulse (interrogation signal). For this purpose, the input transducer may be connected via a cable to a remote interrogation unit. The output transducer may be also be connected by cable to the same remote unit, which suitably further comprises signal processing means. A cabled sensor has several advantages: the sensor can be directly controlled by the remote unit; the sensor has an excellent signal to noise ratio; the seal unit can be equipped with a plurality of acoustic wave sensors without electrical interference.

Alternatively or additionally, the seal unit may be provided with at least one acoustic wave device which is a wireless, passive sensor. Suitably, the acoustic wave device comprises a receiving antenna connected to the input transducer, whereby the interrogation signal is sent via an electromagnetic (radio) wave. The output signal is also sent by radio wave, and the acoustic wave device further comprises a transmitting antenna connected to the output transducer. As will be understood, the antennas may also be configured as a single closed loop for both receiving and transmitting. A wireless sensor has many advantages: the sensor can easily be provided on a rotatable component, such as a wear sleeve; the sensor can be embedded within a carrier material (e.g. a rubber seal lip), meaning that the SAW/BAW elements of the sensor need not be provided with additional sealing; no battery or power supply is required, since the energy for resonating the input transducer is obtained from the interrogation signal.

A radial seal is at least partially surrounded by metallic components. For example, the seal itself will often comprise metal casing and it may be used to seal an annular gap between a bearing housing and a shaft. When metal is interposed between a transceiver of the remote unit and the sensor antenna(s), a signal cannot be received or sent. Thus, when the seal unit comprises a wireless sensor mounted on a non-rotatable part of the seal, the receiving antenna and transmitting antenna of the SAW sensor are preferably arranged at an axially outer side of the seal, to facilitate an uninterrupted signal path of the interrogation signal and of the output signal.

In embodiments of the invention where first and second acoustic wave devices are provided on the rotatable wear sleeve, at an oil side of the seal lip, it is impractical to provide the sensor with antennas that extend outside of the sealed area. Thus, in a further development of the invention, an auxiliary antenna is provided on the seal unit at an axially outer side. In one example, the auxiliary antenna is connectible to the remote unit via a cable. In a further example, the auxiliary antenna serves as a relay antenna for "forwarding" the interrogation signal to the sensor antenna and for forwarding the sensor output signal to the remote unit. Because the auxiliary antenna is necessarily located in close proximity to the sensor antenna, communication between the remote unit and the acoustic wave sensor is ensured. The auxiliary antenna would also enable communication with other wireless acoustic wave sensors which are arranged close to the seal, at a metal-enclosed location. For example, a SAW sensor provided on a rotatable bearing inner ring, where the bearing is arranged axially inward of the seal unit. Thus a seal unit provided with an auxiliary antenna is of use even when the seal unit itself is not equipped with an acoustic wave device.

Other advantages of the present invention will become apparent from the detailed description and accompanying figures.

### BRIEF DESCRIPTION OF THE DRAWINGS

The invention will be described in greater detail in the following, with reference to the embodiments that are shown in the attached drawings, in which
- Figure 1a: shows a partial cross-sectional view of an example of a sensorized seal unit according to the invention, where the sensor detects leakage of a sealed medium;
- Figure 1b: shows a schematic cross-section of a sensor for use in the example of Figure 1 a;
- Figure 2: shows a partial cross-sectional view of a sensorized seal unit provided with a sensor for detecting seal torque;
- Figure 3a: shows a partial cross-sectional view of a second embodiment of a sensorized seal unit according to the invention, where the sensor detects the present of a contaminant;
- Figure 3b: shows a schematic cross-section of a sensor for use in the embodiment of Figure 3a

### DETAILED EMBODIMENTS

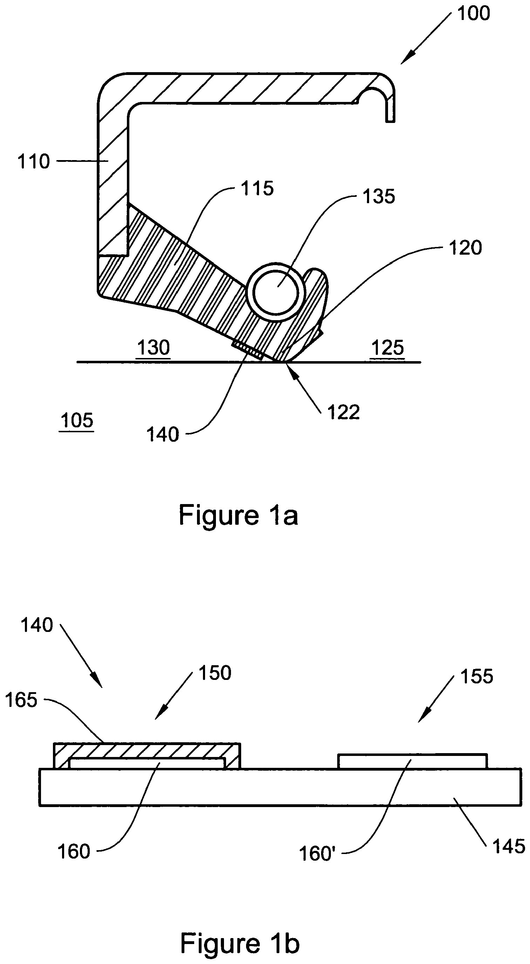

An example of a seal unit according to a first embodiment of the invention is partially shown in cross-section in Figure 1 a. The unit 100 is shown mounted on a shaft 105, and comprises an outer casing 110 to which an elastomeric sealing element 115 is bonded. Nitrile rubber is one example of a suitable elastomer. In use, the unit 100 seals an annular gap between two relatively rotatable components, such as a revolving shaft and a bore of a housing for a rolling element bearing. Suitably, an outer circumference of the casing 110 is mounted within the housing bore, whereby a lip 120 of the sealing element bears against a counterface 122 on the shaft 105. The lip 120 seals a lubricant within the housing. The lubricant may be oil, which is used to lubricate one or more rolling element bearings. Thus, an axially inner side of the lip defines an oil side 125 of the unit 100 and an axially outer side of the lip defines as an air side 130 of the unit. The sealed lubricant may, for example, also be grease.

In this example, the seal unit 100 further comprises a garter spring 135 which urges the seal lip 120 against the counterface 122. The garter spring ensures that the lip and counterface remain in contact with each other, even if the shaft 105 exhibits dynamic eccentricity (shaft runout) and/or if the shaft and the bearing housing are not perfectly coaxial. During rotation of the shaft, the lip 120 is in sliding contact with the counterface 122. This causes wear, which mechanism is accelerated in the event of shaft runout and non-coaxiality as described above, since some sections of the lip 120 will be subject to a greater force than other sections. If the wear becomes excessive and contact is lost between the lip and the counterface, lubricant will leak from the oil side 125 of the seal to the air side 130. Sufficient lubrication is essential for the operation of a rolling element bearing and if too much is lost, the bearing will fail. This failure can, in turn, result in major damage to a machine which incorporates the bearing. In such cases, it is advantageous to be able to detect leakage, so that the seal can be replaced before damage occurs.

According to one embodiment of the invention, the seal unit 100 is provided with a leakage sensor 140 which comprises a surface acoustic wave device.

A schematic cross-section of an example of the leakage sensor 140 is shown in Figure 1b. The sensor comprises a carrier 145 on which a first surface acoustic wave (SAW) device 150 and a second SAW device 155 are provided. Each SAW device 150, 155 comprises a corresponding piezoelectric substrate 160, 160' and further comprises an input transducer for generating a mechanical acoustic wave on the corresponding piezoelectric substrate 160, 160' and further comprises an output transducer for receiving the mechanical acoustic wave and generating an output signal dependent on a physical quantity that affects wave propagation on the corresponding piezoelectric substrate. The first SAW device 150 comprises a covering or a coating 165 (e.g. a silicate coating sputtered onto the substrate 160)) which seals the piezoelectric substrate 160 and the transduction elements of this device. The piezoelectric substrate 160' and transduction elements of the second SAW sensor 155 are exposed.

With reference again to Figure 1a, the leakage sensor is mounted on the seal lip 120 at the air side 130 of the seal, in close proximity to the contact interface between the counterface 125 and the lip 120. The sensor is mounted such that in the event of oil leaking to the air side 130, at least the second SAW device 155 will come into contact with the oil. Preferably, the sensor 140 is oriented in a circumferential direction of the seal lip 120, so that also the first SAW device 150 comes into contact with the oil.

In this example, both the first and second SAW devices are resonance devices: i.e. the first device 150 generates a first output signal and the second device 155 generates a second output signal, which signals represent the resonant frequency of the first and second devices respectively. In an alternative example, the resonant devices are replaced with delay-line SAW devices. Further, the SAW devices may be wireless devices or may be connected via a cable to a remote unit.

Suitably, the first and second SAW devices are calibrated with respect to each other, such that they have the same resonant frequency when subject to the same conditions. Now let us assume that the first and second SAW devices 150, 155 come into contact with leaked oil. Since the piezoelectric substrate 160 of the first device 150 has a coating 165, the leaked oil does not affect the propagation of acoustic waves on the substrate 160. The second device 155 has an exposed piezoelectric substrate 160', and when oil contacts this substrate, the propagation of surface acoustic waves will be affected. In other words, the resonant frequency of the second SAW device will change. Thus, when the substrate 160' of the second SAW device 155 is "dry", the first output signal and the second output signal will be equal. When oil is in contact with the piezoelectric substrate 160' of the second SAW device 155, there will be a difference in the first and second outputs. The difference is indicative of a leak.

In effect, the sealed SAW device 150 serves as a reference for the unsealed SAW device 55. In a further development, the output signal from the sealed SAW device is calibrated with respect to temperature. The leakage sensor 140 may therefore be used not only to detect leakage, but also to measure temperature.

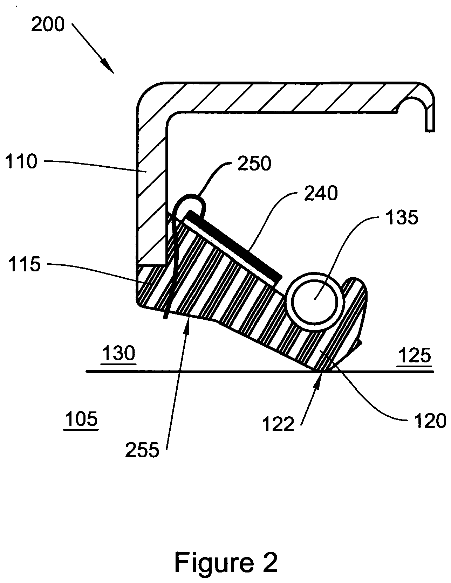

In certain applications, it may be desirable to measure other parameters associated with seal operation. For example, pressure and/or torque. Figure 2 shows part of an example of a seal unit provided with a torque sensor that comprises an acoustic wave device. Features which correspond to those of the seal unit depicted in Figure 1 a are denoted with the same reference numerals.

In the example of Figure 2, the seal unit 200 comprises a wireless torque sensor 240 which is mounted on a radially outer surface of the sealing element 115. The torque measured is indicative of the force exerted on the seal lip 120 by the garter spring 135, and is thus indicative of the friction generated between the lip 120 and the counterface 122 during rotation of the shaft 105. Monitoring seal torque is useful because an excessively high value will indicate that the seal lip is being subject to excessive friction and wear. Thus, the seal can be replaced before leakage occurs or possibly corrective action can be taken.

The torque sensor 240 comprises in this example a SAW device, with an input transducer deposited on a piezoelectric substrate that resonates in response to an interrogation signal and generates a mechanical acoustic wave on the substrate. The SAW device also has an output transducer deposited on the piezoelectric substrate, which receives the acoustic wave and generates an output signal whose value changes when the piezoelectric substrate is subject to a torque. Suitably, the interrogation signal is sent from a remote unit which is further adapted to receive and process the output signal. The wireless sensor 240 therefore comprises an antenna 250 for receiving the interrogation signal and for transmitting the output signal.

As may be derived from Figure 2, the wireless sensor 240 is almost completely surrounded by metal. The metal casing 110 of the unit encloses the sensor at a radially outward side and an axially outward side. The shaft 105 encloses the sensor in a radially inward direction and e.g. a bearing housing (not shown) encloses the sensor in an axially inward direction. In effect, the sensor 240 is shielded from receiving and transmitting signals. Thus, the sensor antenna 250 suitably extends through a body of the sealing element 115 and emerges and is arranged on a radially inner surface 255 of the sealing element, at the air side 130 of the seal. This enables the remote (processing) unit and the sensor 240 to communicate with each other.

Proper lubrication of a rolling element bearing or other rotatable component is not merely a question of having sufficient lubricant. The quality of the lubricant also plays a role, particularly in high load applications. Contaminants are then more likely to cause wear and damage. Thus, in a second embodiment of the invention, the seal unit is provided with a wireless acoustic wave sensor that is adapted to detect the presence of a contaminant.

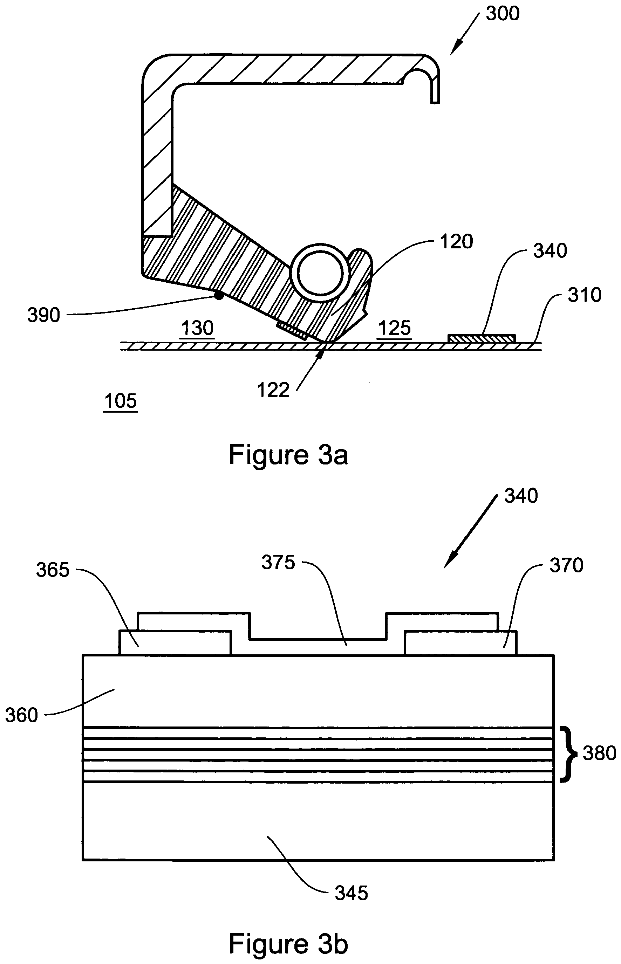

Figure 3a shows part of an example of the second embodiment of the invention. Again, features which correspond to those of the seal unit depicted in Figure 1a are denoted with the same reference numerals. In the example of Figure 3, the seal unit 300 further comprises a wear sleeve 310. The wear sleeve is mounted over a shaft 105 and has a surface that acts as the counterface 122 for the seal lip 120. Wear sleeves are commonly applied when the surface of a shaft does not provide an adequate counterface.

The wireless sensor 340 is mounted on a radially outer surface of the wear sleeve, at the oil side 125 of the seal. Again, the sensor 340 comprises at least a first acoustic wave device. The sensor in this embodiment may be a bulk acoustic wave (BAW) device, an example of which is shown in cross-section in Figure 3b. The sensor 340 comprises a piezoelectric substrate 360 on which an input transducer 365 and an output transducer 370 are deposited. Examples of suitable materials for the substrate are aluminium nitride (AIN) and lead zirconium titanate (PZT). The sensor 340 further comprises a sensitive coating 375, which reacts with hydrogen by means of e.g. absorption. The coating is provided on the piezoelectric substrate 360 and may, as shown, partially cover the input and output transducers 365, 370, or may fully cover the transducers. The piezoelectric substrate 360 is deposited on a carrier 345, which may be made from a semiconducting material such as silicon. Further, the carrier 345 comprises a plurality of acoustic reflectors 380.

When the input transducer 365 receives an interrogation signal, the piezoelectric substrate 360 resonates and an acoustic wave is generated which propagates through the bulk of the BAW device. The wave is reflected back to the output transducer 370 by the acoustic reflectors 380, and the device resonates at a particular resonant frequency, which the output transducer 370 converts into an electrical output signal. In the presence of hydrogen, the sensitive coating 375 absorbs the hydrogen and the resonant frequency of the device changes, meaning that the output signal changes. Thus, similar to the first embodiment in which the seal unit comprises a SAW leakage sensor, the BAW contaminant sensor 340 advantageously comprises a first BAW resonator which comprises the sensitive coating 375 and an additional BAW resonator that is sealed. The output signal from the additional BAW resonator is unaffected by the presence of hydrogen, and therefore acts as a reference against which the output signal from the first BAW resonator can be compared. A difference between the two signals indicates the presence of hydrogen. The sensor 340 may also be calibrated such that the extent of the detected difference gives a quantitative indication of the amount of hydrogen present. In other examples, the wireless sensor 340 is adapted to detect the presence of metal oxides and/or water. Furthermore, when placed at the airside 135 of the seal, a "contaminant" sensor could be provided that comprises a coating that is sensitive to the presence of oil. Thus, such a sensor may also be used as a leakage detector.

The wireless sensor in the embodiment depicted in Figure 3a is provided at the oil side 125 of the seal, on the wear sleeve 310 which, during operation, rotates. It is therefore not possible to lead a sensor antenna through e.g. the seal lip 120. Thus, in a further development of the invention, the seal unit 300 is provided with an auxiliary antenna 390. Preferably, the auxiliary antenna is arranged at an axially outer side of the seal lip 120. The auxiliary antenna 390 may comprise a copper disc or ring. In one example, the auxiliary antenna 390 serves as a relay antenna, for forwarding an interrogation signal from a remote unit to the input transducer 365 and for forwarding the one or more output signals to the remote (processing) unit. Alternatively, the auxiliary antenna is connectable via a cable to the remote unit, meaning that the auxiliary antenna 390 sends the interrogation signal and receives the one or more output signals.

A signal path between the auxiliary antenna 390 and the wireless sensor 340 is blocked by the seal lip 120. Although the signals can pass through the elastomeric material of the seal lip, passage becomes increasingly uncertain when there is a large distance between e.g. a transceiver of the remote unit and an antenna of the wireless sensor 340. This problem is overcome by means of the auxiliary antenna 390, since it is located in close proximity to the wireless sensor 340. Furthermore, the presence of an auxiliary antenna on the sealing element 115 will enable communication with further wireless acoustic wave devices which may be mounted at locations that are shielded by metal. For example, imagine that the inner ring of a rolling element bearing has been provided with a wireless SAW temperature sensor and the bearing is mounted in a housing. The wireless sensor would normally be unable to receive and send signals, since it is almost entirely surrounded by metal. The auxiliary antenna of the invention, however, will enable signal communication.

A number of aspects/embodiments of the invention have been described. It is to be understood that each aspect/embodiment may be combined with any other aspect/embodiment. The invention may thus be varied within the scope of the accompanying patent claims.

## Claims

1. A seal unit (100, 200, 300) comprising a radial seal lip (120) which is configured, in use, to bear against a counterface (122) and retain a lubricant at an oil side (125) of the seal, wherein
the seal unit is provided with one or more sensors (140, 340) comprising:
a first acoustic wave device (150, 155, 340) with:
- an input transducer (365) for generating a mechanical acoustic wave on or through a piezoelectric substrate (160, 160', 360); and
- an output transducer (370) for detecting the mechanical acoustic wave and generating a first output signal dependent on a wave propagation between the input and output transducers (365, 370),
**characterized in that** the seal unit further comprises:
- a second acoustic wave device (150, 155) which generates a second output signal that is essentially identical to the first output signal when the first and second devices are subjected to the same conditions, wherein one of the first and second acoustic wave devices (150, 155, 340) is hermetically sealed and the other of the first and second devices (150, 155, 340) is exposed to the environment.

2. Seal unit according to claim 1, the unit (300) further comprising a wear sleeve (310) having the counterface (122) against which the seal lip (120) bears.

3. Seal unit according to claim 1 or 2, wherein at least one of the one or more sensors (140, 240, 340) is a wireless sensor and comprises an antenna (250) for receiving an interrogation signal and transmitting the output signals.

4. Seal unit according to claim 3, wherein the wireless sensor (240) is mounted within the seal unit and the antenna (250) emerges and is arranged at an axially outer side of the seal unit.

5. Seal unit according to any preceding claim, the unit (300) further comprising an auxiliary antenna (390).

6. Seal unit according to any preceding claim, wherein the sealed acoustic wave device (150) is adapted to measure temperature

7. Seal unit according to any preceding claim, wherein the piezoelectric substrate (360) of the exposed acoustic wave device (340) is provided with a coating (375) that is chemically sensitive to a particular contaminant.

8. Seal unit according to claim 7, wherein the exposed acoustic wave device (340) is provided at the oil side (125) of the seal and is arranged such that the coating (375) can make contact with the sealed lubricant.

9. Seal unit according to any of claims 1 to 7, wherein the exposed acoustic wave device (155) is mounted at an air side (130) of the seal, in close proximity to a contact interface between the lip (120) and the counterface (122), and is adapted to detect the presence of lubricant at the air side (130).

10. Seal unit according to any preceding claim, wherein one of the one or more sensors (140, 240, 340) is mounted at the oil side (125) of the seal and is adapted to measure viscosity.

11. Seal unit according to any of claims 2 to 9, wherein one of the one or more sensors (340) is mounted on a radially outer surface of the wear sleeve (310).

12. Seal unit according to any preceding claim, wherein the first acoustic wave device (150, 155) of the one or more sensors is a surface acoustic wave device.

13. Seal unit according to any of claims 1 to 11, wherein the first acoustic wave device (340) of the one or more sensors is a bulk acoustic wave device.

## Patentansprüche

1. Dichtungseinheit (100, 200, 300), umfassend eine radiale Dichtungslippe (120), die im Gebrauch konfiguriert ist, um an einer Gegenfläche (122) zu lagern und ein Schmiermittel auf einer Ölseite (125) der Dichtung zu halten, wobei
die Dichtungseinheit mit einem oder mehreren Sensoren (140, 340) bereitgestellt ist, umfassend: eine erste akustische Wellenvorrichtung (150, 155, 340) mit:
- einem Eingangswandler (365) zum Erzeugen einer mechanischen akustischen Welle auf oder durch ein piezoelektrisches Substrat (160, 160', 360); und
- einem Ausgangswandler (370) zum Erfassen der mechanischen akustischen Welle und zum Erzeugen eines ersten Ausgangssignals in Abhängigkeit von einer Wellenausbreitung zwischen den Eingangs- und Ausgangswandlern (365, 370),
**dadurch gekennzeichnet, dass** die Dichtungseinheit ferner umfasst:
- eine zweite akustische Wellenvorrichtung (150, 155), die ein zweites Ausgangssignal erzeugt, das im Wesentlichen identisch mit dem ersten Ausgangssignal ist, wenn die ersten und zweiten Vorrichtungen den gleichen Bedingungen ausgesetzt werden, wobei eine von erster und zweiter akustischer Wellenvorrichtung (150, 155, 340) hermetisch abgedichtet ist und die andere von erster und zweiter Vorrichtung (150, 155, 340) der Umgebung ausgesetzt ist.

2. Dichtungseinheit nach Anspruch 1, wobei die Einheit (300) ferner eine Verschleißhülse (310) aufweist, deren Gegenfläche (122) an der Dichtungslippe (120) gelagert ist.

3. Dichtungseinheit nach Anspruch 1 oder 2, wobei mindestens einer des einen oder der mehreren Sensoren (140, 240, 340) ein drahtloser Sensor ist und eine Antenne (250) zum Empfangen eines Abfragesignals und zum Übertragen der Ausgangssignale ist.

4. Dichtungseinheit nach Anspruch 3, wobei der drahtlose Sensor (240) innerhalb der Dichtungseinheit montiert ist und die Antenne (250) an einer axialen Außenseite der Dichtungseinheit austritt und daran angeordnet ist.

5. Dichtungseinheit nach einem der vorhergehenden Ansprüche, wobei die Einheit (300) ferner eine Hilfsantenne (390) umfasst.

6. Dichtungseinheit nach einem der vorhergehenden Ansprüche, wobei die abgedichtete akustische Wellenvorrichtung (150) zum Messen der Temperatur ausgelegt ist.

7. Dichtungseinheit nach einem der vorhergehenden Ansprüche, wobei das piezoelektrische Substrat (360) der freigelegten akustischen Wellenvorrichtung (340) mit einer Beschichtung (375) bereitgestellt ist, die chemisch für eine bestimmte Verunreinigung empfindlich ist.

8. Dichtungseinheit nach Anspruch 7, wobei die freigelegte akustische Wellenvorrichtung (340) auf der Ölseite (125) der Dichtung bereitgestellt ist und derart angeordnet ist, dass die Beschichtung (375) mit dem abgedichteten Schmiermittel in Kontakt treten kann.

9. Dichtungseinheit nach einem der Ansprüche 1 bis 7, wobei die freigelegte akustische Wellenvorrichtung (155) auf einer Luftseite (130) der Dichtung montiert ist, in Nähe einer Kontaktschnittstelle zwischen der Lippe (120) und der Gegenfläche (122) und ausgelegt ist, um die Gegenwart von Schmiermittel auf der Luftseite (130) zu erfassen.

10. Dichtungseinheit nach einem der vorhergehenden Ansprüche, wobei einer der einen oder mehreren Sensoren (140, 240, 340) auf der Ölseite (125) der Dichtung montiert ist und zum Messen der Viskosität ausgelegt ist.

11. Dichtungseinheit nach einem der Ansprüche 2 bis 9, wobei einer der einen oder mehreren Sensoren (340) auf einer radial äußeren Oberfläche der Verschleißhülse (310) montiert ist.

12. Dichtungseinheit nach einem der vorhergehenden Ansprüche, wobei die erste akustische Wellenvorrichtung (150, 155) des einen oder der mehreren Sensoren eine oberflächenakustische Wellenvorrichtung ist.

13. Dichtungseinheit nach einem der Ansprüche 1 bis 11, wobei die erste akustische Vorrichtung (340) des einen oder der mehreren Sensoren eine akustische Volumenwellenvorrichtung ist.

## Revendications

1. Unité de joint (100, 200, 300) comprenant une lèvre de joint radiale (120) qui est configurée, en utilisation, pour appuyer contre une face d'appui (122) et retenir un lubrifiant d'un côté de l'huile (125) du joint, dans laquelle
l'unité de joint est pourvue d'un ou de plusieurs capteurs (140, 340) comprenant :
un premier dispositif d'onde acoustique (150, 155, 340) avec :
- un transducteur d'entrée (365) pour générer une onde acoustique mécanique sur ou à travers un substrat piézoélectrique (160, 160', 360) ; et
- un transducteur de sortie (370) pour détecter l'onde acoustique mécanique et générer un premier signal de sortie selon une propagation d'onde entre les transducteurs d'entrée et de sortie (365, 370),
**caractérisée en ce que** l'unité de joint comprend en outre :
- un second dispositif d'onde acoustique (150, 155) qui génère un second signal de sortie qui est essentiellement identique au premier signal de sortie lorsque les premier et second dispositifs sont soumis aux mêmes conditions, dans laquelle l'un des premier et second dispositifs d'onde acoustique (150, 155, 340) est scellé hermétiquement et l'autre des premier et second dispositifs (150, 155, 340) est exposé à l'environnement.

2. Unité de joint selon la revendication 1, l'unité de joint (300) comprenant en outre un manchon d'usure (310) ayant la face d'appui (122) contre laquelle la lèvre de joint (120) appuie.

3. Unité de joint selon la revendication 1 ou 2, dans laquelle au moins l'un des un ou plusieurs capteurs (140, 240, 340) est un capteur sans fil et comprend une antenne (250) pour recevoir un signal d'interrogation et transmettre les signaux de sortie.

4. Unité de joint selon la revendication 3, dans laquelle le capteur sans fil (240) est monté au sein de l'unité de joint et l'antenne (250) émerge et est agencée d'un côté axialement extérieur de l'unité de joint.

5. Unité de joint selon l'une quelconque des revendications précédentes, l'unité (300) comprenant en outre une antenne auxiliaire (390).

6. Unité de joint selon l'une quelconque des revendications précédentes, dans laquelle le dispositif d'onde acoustique scellé (150) est adapté pour mesurer une température.

7. Unité de joint selon l'une quelconque des revendications précédentes, dans laquelle le substrat piézoélectrique (360) du dispositif d'onde acoustique exposé (340) est pourvu d'un revêtement (375) qui est chimiquement sensible à un contaminant particulier.

8. Unité de joint selon la revendication 7, dans laquelle le dispositif d'onde acoustique exposé (340) est prévu du côté de l'huile (125) du joint et est agencé de sorte que le revêtement (375) puisse établir un contact avec le lubrifiant scellé.

9. Unité de joint selon l'une quelconque des revendications 1 à 7, dans laquelle le dispositif d'onde acoustique exposé (155) est monté d'un côté de l'air (130) du joint, à proximité étroite d'une interface de contact entre la lèvre (120) et la face d'appui (122), et est adapté pour détecter la présence de lubrifiant du côté de l'air (130).

10. Unité de joint selon l'une quelconque des revendications précédentes, dans laquelle l'un des un ou plusieurs capteurs (140, 240, 340) est monté du côté de l'huile (125) du joint et est adapté pour mesurer la viscosité.

11. Unité de joint selon l'une quelconque des revendications 2 à 9, dans laquelle l'un des un ou plusieurs capteurs (340) est monté sur une surface radialement extérieure du manchon d'usure (310).

12. Unité de joint selon l'une quelconque des revendications précédentes, dans laquelle le premier dispositif d'onde acoustique (150, 155) des un ou plusieurs capteurs est un dispositif d'onde acoustique de surface.

13. Unité de joint selon l'une quelconque des revendications 1 à 11, dans laquelle le premier dispositif d'onde acoustique (340) des un ou plusieurs capteurs est un dispositif d'onde acoustique de volume.
